# EUROPÄISCHE PATENTSCHRIFT

(11) **EP 2 341 765 B1**
(45) Veröffentlichungstag und Bekanntmachung des Hinweises auf die Patenterteilung: **28.08.2013**
(21) Anmeldenummer: 09753031.5
(22) Anmeldetag: 05.11.2009
(51) Int. Cl.: A01C 7/04, A01B 79/00

(54) **Säherz für eine Einzelkornsämaschine**
Sowing device for a single grain seeder
Élément distributeur pour semoir monograine

(30) Priorität: 08.11.2008 DE 102008056526
(43) Veröffentlichungstag der Anmeldung: 13.07.2011
(73) Patentinhaber: Kverneland AS, 4355 Kvernaland (NO)
(72) Erfinder: BEIER, Carsten, 33154 Salzkotten (DE)
(74) Vertreter: Schweiger, Johannes
(86) Internationale Anmeldenummer: PCT/EP2009/007916
(87) Internationale Veröffentlichungsnummer: WO 2010/051991

(56) Entgegenhaltungen:
- EP-A1- 0 195 900
- EP-A2- 0 356 771
- WO-A1-00/64234
- FR-A1- 2 323 308

## Beschreibung

Die Erfindung betrifft ein Säherz nach Anspruch 1.

Bekannte Säherzen für pneumatische Einzelkornsäaggregate bestehen in der Regel aus zwei Hälften, nämlich einem hinteren Teil, in welchem die Lagerung der Säscheibe und der Unterdruckbereich untergebracht sind und einem vorderen Teil, in welchen der untere Ausgang des Saatgutbehälters mündet und der selbst einen Saatgutspeicher aufweist.

In an die Größe des Saatguts angepassten Sälöchern der Säscheibe, die in bestimmten Abständen auf einem Kreisring angeordnet sind, werden einzelne Saatkörner aus dem Saatgutspeicher aufgenommen und in einem Abgabebereich durch Unterbrechung des Unterdrucks abgeworfen. Falls die Unterbrechung des Unterdrucks für den Abwurf nicht ausreicht, ist in kurzem Abstand hinter der idealen Abwurfstelle ein Zwangsabstreifer vorgesehen.

Um die Säscheibe für die erneute Belegung mit Saatgut vorzubereiten, wird speziell bei sehr kleinem und/oder feinem Saatgut das Loch in der Säscheibe mit Überdruck gereinigt. Zu diesem Zweck ist auf der Rückseite der Säscheibe im Stand der Technik gemäß EP 0 195 900 A1 eine Düse dicht anliegend an der Säscheibe so angebracht, dass die Druckluft durch jedes Loch geblasen wird, um das Loch von Saatgutresten zu befreien.

Die Düse unterliegt einerseits dem Verschleiß, da sie ständig durch die rotierende Säscheibe abgetragen wird und andererseits verschmutzt die Düse sowohl durch Verunreinigungen in der Druckluft als auch durch Abrieb, Beize oder Verschmutzungen von der Säscheibe.

Ein weiterer Nachteil besteht darin, dass die Reinigungswirkung der Düsen aus dem Stand der Technik, insbesondere nach längerem Gebrauch, unbefriedigend ist.

Eine Sämaschine mit mechanischer Reinigung der Löcher ist in der EP 0 356 771 A2 beschrieben.

Aufgabe der vorliegenden Erfindung ist es daher, ein Säherz mit Reinigungsmitteln mit funktional verbesserter Reinigungswirkung vorzusehen, die günstig herzustellen und möglichst einfach und flexibel austauschbar sind.

Diese Aufgabe wird mit einem Säherz mit den Merkmalen des Anspruchs gelöst. Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren offenbarten Merkmalen.

Grundidee der vorliegenden Erfindung ist es, die Sälöcher der Säscheibe des Säherzes durch mehrfache, insbesondere intermittierende, Reinigung in zumindest zwei separaten Reinigungsphasen von verbleibendem Saatgut und/oder Schmutz zu befreien. Mit anderen Worten: die Reinigung erfolgt vorzugsweise intervallartig, beispielsweise durch mehrere, kurz hintereinander erfolgende Druckstöße auf jedes Loch pro Umdrehung, also durch mehrfache Fluidbaufschlagung. Besonders vorteilhaft ist es, wenn mindestens zwei gleichartige Reinigungsphasen vorgesehen sind. Die Reinigungswirkung wird durch die vorbeschriebene Maßnahme überraschend stark verbessert, insbesondere im Vergleich zu einer bloß längeren und/oder intensiveren Reinigung.

Unter dem Begriff Saatgut im Rahmen der vorliegenden Offenbarung sind beispielsweise Dünger, Samenkörner, ob pilliert oder nackt, subsumierbar.

Erfindungsgemäß erfolgen zumindest zwei der Reinigungsphasen kontaktlos, das heißt beispielsweise durch einen mittels Druckluft ausgeübten Druckstoß auf die Sälöcher der Säscheibe. Eine etwaige zusätzliche mechanische Reinigung, wie beispielsweise durch einen Abstreifer oder durch Bürsten ist im Rahmen der vorliegenden Erfindung denkbar.

Mit Vorteil umfassen die Reinigungsmittel Fluidmittel, insbesondere eine Fluidströmung, vorzugsweise durch Druckluftbeaufschlagung, da hierdurch eine konstante und effektive Reinigung während der Rotation der Säscheibe umgesetzt werden kann.

Soweit die Reinigungsphasen in definierten, vorzugsweise gleichmäßigen, Intervallen vorgesehen sind, wird die Reinigungswirkung stark verbessert, insbesondere wenn die Intervalle kurz hintereinander erfolgen, da durch die mehrmalige schlagartige Änderung der Druckbeaufschlagung der Sälöcher, ähnlich dem Prinzip einer Schlagbohrmaschine, eine besonders wirkungsvolle Reinigung möglich wird.

Weiterhin ist in einer bevorzugten Ausführungsform vorgesehen, dass die Reinigungsmittel ein zu einer Umlaufkreisbahn U der Sälöcher gegenüberliegend befestigtes, insbesondere einziges, Reinigungselement umfassen. Die Umlaufkreisbahn U beschreibt mit Vorteil einen Kreisring. Durch das Vorsehen eines einzigen Reinigungsmittels wird der Austausch vereinfacht und darüber hinaus werden die Herstellungskosten auf ein Minimum reduziert. Das Reinigungselement liegt an der Säscheibe, insbesondere federbelastet, an und erstreckt sich über einen Kreisringsektor K der Säscheibe. Durch eine Federbeaufschlagung wird das Reinigungselement immer mit optimalem Druck an die Säscheibe angepresst. Dies ist insbesondere nach einer längeren Laufzeit des Säherzes wichtig, da das Reinigungselement durch die Rotation der Säscheibe verschleißt bzw. abgetragen wird. Dadurch, dass gemäß der vorliegenden Erfindung mehrere Reinigungsphasen vorgesehen sind, kann der Druck auf das Reinigungselement trotz verbesserter Reinigungswirkung sogar gegenüber den im Stand der Technik bekannten Düsen reduziert werden, wodurch der Verschleiß verringert wird.

Die vorgenannte Ausführungsform kann noch weiter dadurch verbessert werden, indem das Reinigungselement eine durch die Säscheibe, Seitenwände und eine der Säscheibe gegenüberliegende Rückwand gebildete Fluidkammer aufweist. Diese ist mit einem Fluid beaufschlagbar, insbesondere über eine Öffnung in der Rückwand der Fluidkammer.

Mit Vorteil ist jedes Loch der Säscheibe pro Umdrehung der Säscheibe zumindest zwei mal, insbesondere vollflächig, von der Fluidkammer mit Fluid, insbesondere Luft, beaufschlagbar. Sobald ein Loch der Säscheibe mit der Fluidkammer in Kontakt kommt bzw. die Fluidkammer überstreicht, ist das Loch schlagartig von dem in der Fluidkammer vorherrschenden Druck mit entsprechender Druckdifferenz zur Umgebung, also zu dem vorher in diesem Loch vorherrschenden Druck, beispielsweise Atmosphärendruck, beaufschlagt und etwaiger Schmutz oder Reste von Saatgut werden ausgetragen. Soweit durch die erste Reinigungsphase etwaiges verklemmtes Saatgut oder sonstige Verschmutzungen, beispielsweise durch eine das Saatgut umgebende Düngerschicht, unzureichend aus dem Loch ausgetragen wurde, wird diese Verunreinigung in der zweiten Reinigungsphase oder weiteren Reinigungsphasen sicher ausgetragen. Dafür trägt insbesondere die intervallartige Druckbeaufschlagung in Kombination mit der Scherwirkung an Seitenwänden der Fluidkammer beim Überstreichen der Fluidkammer Sorge.

Hieran sind insbesondere an den Seitenwänden der Fluidkammer vorgesehene Unterbrechungsabschnitte zur Unterbrechung der Fluidbeaufschlagung beteiligt, die durch Beaufschlagungsabschnitte der Fluidkammer gebildet werden.

Indem die Beaufschlagungsabschnitte in einem Abstand B entlang der Umlaufkreisbahn U angeordnet sind, der dem Abstand A zur gleichzeitigen Beaufschlagung von mindestens zwei benachbarten Sälöchern im Wesentlichen entspricht, ist einerseits eine platzsparende Unterbringung des Reinigungselements und andererseits eine Beaufschlagung in möglichst kurzen Intervallen realisierbar. Mit Vorteil kann der Abstand B um etwa den Durchmesser D eines Loches der Säscheibe gegenüber Abstand A verringert sein.

In einer alternativen Ausführungsform der Erfindung ist vorgesehen, dass die Reinigungsmittel, insbesondere die Fluidkammer, mehrere Umlaufkreisbahnen U, U' beaufschlagend ausgebildet ist, wobei die Reinigungsphasen der Sälöcher der Umlaufkreisbahn U im Wechsel oder gleichzeitig mit den Reinigungsphasen der Sälöcher der Umlaufkreisbahn U' ablaufend ausgebildet sind.

Das Säherz weist mit Vorteil einen Fluidanschluss zum Anschluss der Reinigungsmittel, insbesondere des Reinigungselements, auf. Das Fluid ist mittels einer Pumpe von einem Fluidreservoir oder einer Pneumatik der Einzelkornsämaschine zum Fluidanschluss und damit zur Fluidkammer förderbar. Als eigenständige Erfindung ist die Maßnahme zu betrachten, dass der Fluidanschluss federnd ausgebildet ist, insbesondere als Faltenbalg, der von dem Fluid durchströmt wird und gleichzeitig die Federwirkung des Fluidanschlusses gegenüber der Säscheibe umsetzt.

Weitere Vorteile, Merkmale und Einzelheiten der Erfindung ergeben sich aus der nachfolgenden Beschreibung bevorzugter Ausführungsbeispiele sowie an Hand der Zeichnungen. Diese zeigen in:
- Fig. 1a und 1 b:: perspektivische Ansichten eines Einzelkornsäaggregats einer erfindungsgemäßen Einzelkornsämaschine von schräg hinten (Figur 1a) und von schräg vorne (Figur 1b),
- Figur 2a:: eine perspektivische Ansicht eines teilweise aufgeschnittenen erfindungsgemäßen Säherzes,
- Figur 2b:: eine perspektivische Detailansicht des Reinigungselements aus Figur 2a,
- Figur 3a und 3b:: perspektivische Detailansichten aus Figur 2a betreffend verschiedene Ausführungsformen des erfindungsgemäßen Reinigungselements,
- Figur 4:: eine perspektivische Ansicht des erfindungsgemäßen Fluidanschlusses, ausgebildet als Faltenbalg und
- Figur 5a und 5b:: schematische Darstellung der Anordnung des erfindungsgemäßen Reinigungselements gegenüber Sälöchern der Säscheibe.

In den Figuren sind gleiche Bauteile und Bauteile mit der gleichen Funktion mit den gleichen Bezugszeichen gekennzeichnet.

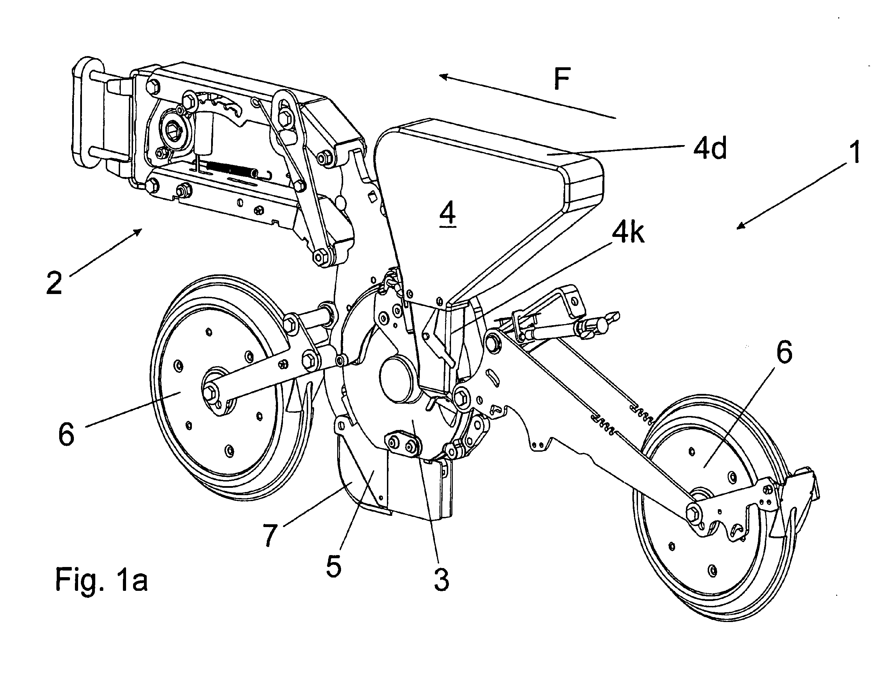

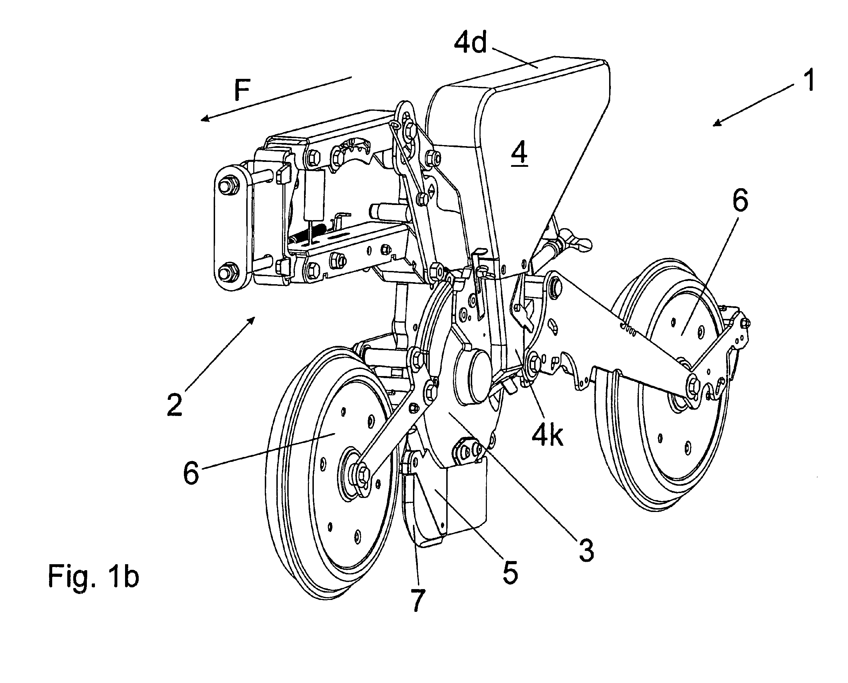

In Figuren 1a und 1b ist ein Säaggregat 1 einer erfindungsgemäßen Einzelkornsämaschine dargestellt, das über einen Arm 2 am Rahmen der Einzelkornsämaschine befestigt ist. Dementsprechend ist die Fahrtrichtung beim Betrieb der Einzelkornsämaschine in der durch Pfeil F angegebenen Richtung.

An dem Arm 2, der eine Schwenkbewegung, vorzugsweise als Vertikalbewegung durch Ausbildung des Arms 2 als Parallelogrammarm, zulässt, sind ein Säherz 3, ein oberhalb des Säherzes 3 angeordneter Tank 4, ein unterhalb des Säherzes 3 angeordnetes Säschar 5 sowie zwei in Fahrtrichtung F vor und hinter dem Säherzen 3 angeordnete, gegenüber dem Säherz schwenkbare Laufräder 6 angebracht.

Der Tank 4 ist über einen Deckel 4d verschließbar und mit Saatgut 16 befüllbar, das wiederum über einen Kanal 4k seitlich in das Säherz 3 geführt wird.

Das Saatgut 16 wird im Säherz 3 vereinzelt und über das Säschar 5 in eine durch eine Scharspitze 7 des Säschars 5 geöffnete Furche im Ackerboden abgelegt.

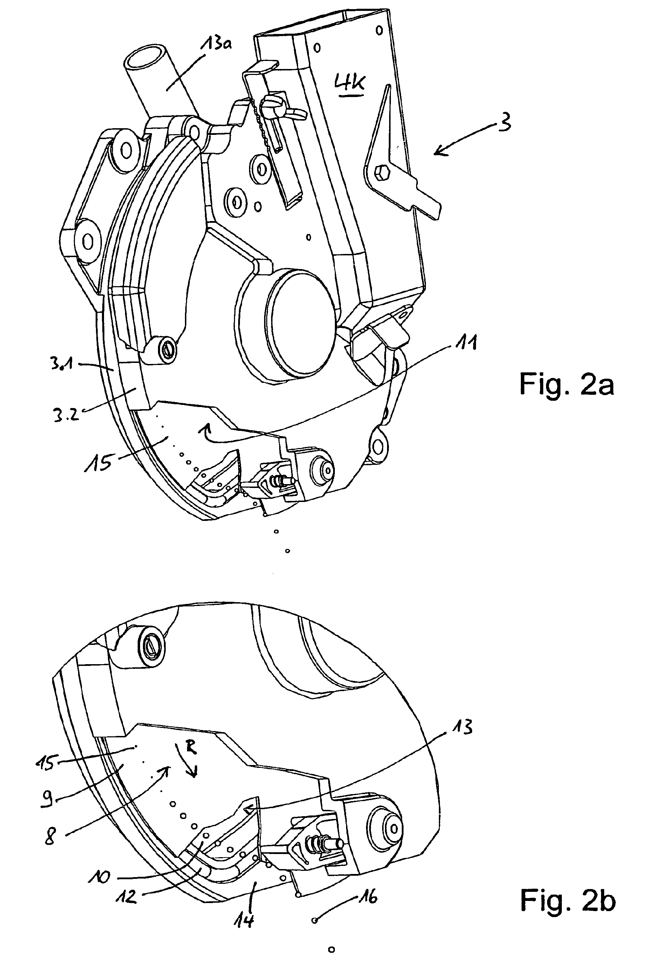

In Figur 2a und Figur 2b ist das Säherz 3 mit seinen beiden Hälften 3.1 und 3.2 dargestellt, wobei ein durch die beiden Hälften 3.1 und 3.2 umschlossener Arbeitsraum 8 durch eine Säscheibe 9 in eine Druckkammer 10 und eine Saatgutkammer 11 unterteilt wird.

Die Druckkammer 10 ist durch einen, vorzugsweise herkömmlichen Dichtring 12 in einen Unterdruckbereich 13 und einen Normaldruckbereich 14 aufgeteilt. Wesentlich ist dabei, dass im Unterdruckbereich 13 an zur Aufnahme und Abgabe von Saatgut dienenden Sälöchern 15 der Säscheibe 9 eine Druckdifferenz anliegt, die im Normaldruckbereich 14 aufgelöst wird, wodurch beim Übergang der Sälöcher 15 vom Unterdruckbereich 13 in den Normaldruckbereich 14 das Saatgut 16 und durch Rotationsbewegung der Säscheibe 9 in einer Laufrichtung R der Säscheibe 9 abgeworfen wird.

Der Unterdruckbereich 13 wird von einer nicht dargestellten Pumpe oder einem Unterdruckgebläse über den Anschluss 13a mit Unterdruck beaufschlagt.

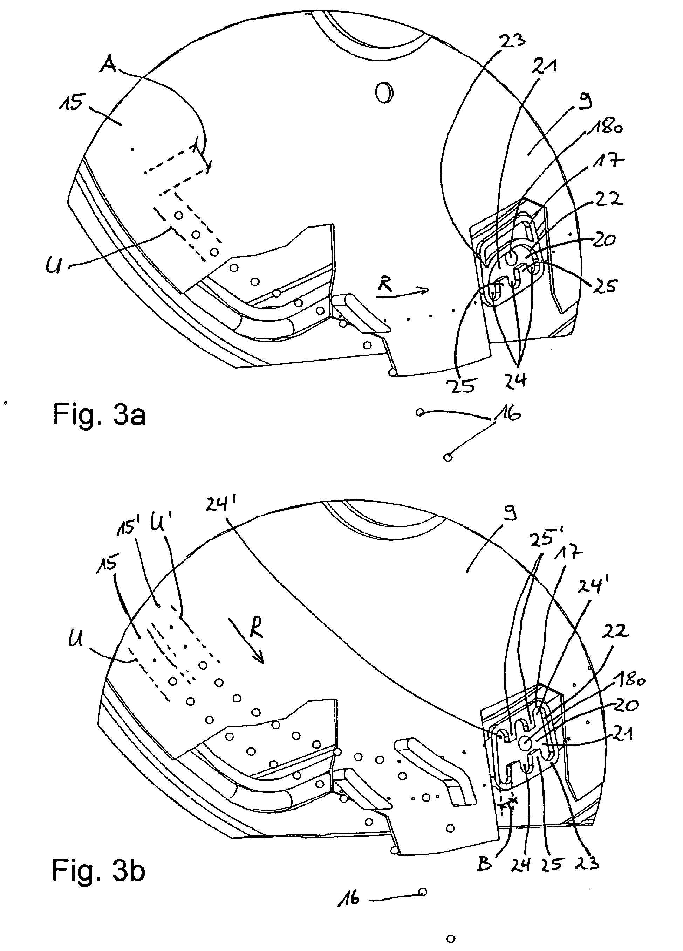

Die Sälöcher 15 sind auf einer Kreisbahn der Säscheibe 9 in definierten Abständen angeordnet, wobei auch mehrere Kreisbahnen mit Sälöchern 15 vorgesehen sein können (siehe Figur 3b).

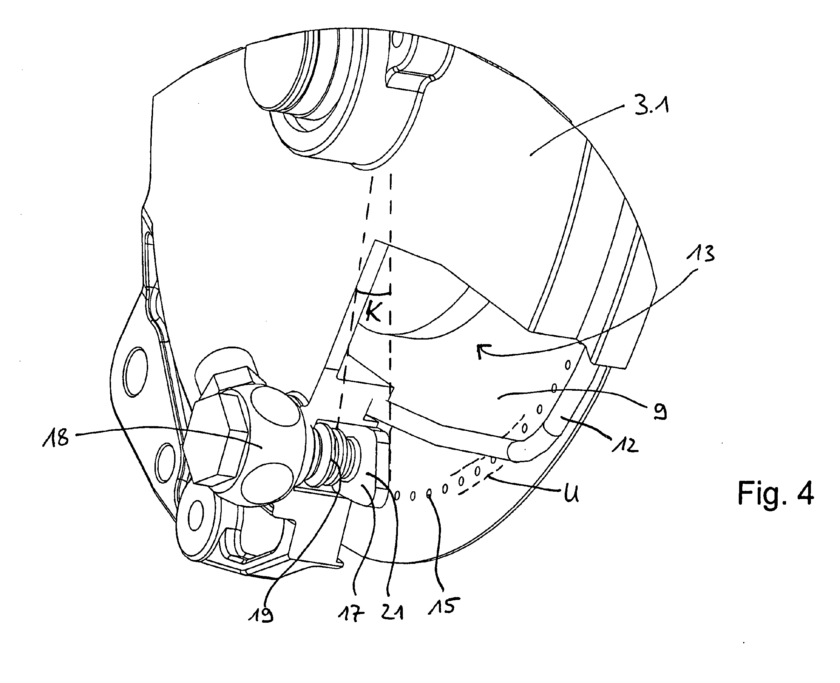

Das für die vorliegende Erfindung entscheidende Bauteil, nämlich ein Reinigungselement 17 ist in Figur 3a und 3b in zwei beispielhaften Ausführungen dargestellt. Das Reinigungselement 17 wird durch einen in Figur 4 dargestellten Fluidanschluss 18 von der Seite der Druckkammer 10 bzw. der Hälfte 3.1 des Säherzes 3 an eine hier nicht dargestellte Fluidpumpe oder die Pneumatik der Einzelkornsämaschine angeschlossen und gleichzeitig durch einen Faltenbalg 19 des Fluidanschlusses 18 an die rotierbare Säscheibe 9 gedrückt, und zwar in einem Bereich, der durch eine Umlaufkreisbahn U, in welchem die Sälöcher 15 angeordnet sind, und einen Kreisringsektor K der Säscheibe 9 definiert ist.

Der Fluidanschluss 18 führt über den Faltenbalg 19 und eine in Figuren 3a und 3b dargestellte Öffnung 18o in eine Fluidkammer 20, die durch eine zum Fluidanschluss 18 gerichtete Rückwand 21, Seitenwände 22 und die Säscheibe 9 begrenzt ist. Das Reinigungselement 17 ist mit Vorteil derart gebildet, dass an einer Kontaktfläche 23 zwischen Reinigungselement 17 und der Säscheibe 9 eine Dichtwirkung erzielt wird bei gleichzeitig möglichst geringer Reibung zwischen dem Reinigungselement 17 und der Säscheibe 9. Entscheidend ist hierbei, dass das Material der Säscheibe 9 weniger verschleißend ausgebildet ist als das Material des Reinigungselements 17, also beispielsweise härter ist. Als Material für das Reinigungselement 17 eignet sich Messing oder harter Kunststoff, insbesondere mit einem Teflonanteil.

Das Reinigungselement 17 weist in dem Ausführungsbeispiel gemäß Figur 3a drei durch zwei Unterbrechungsabschnitte 25 gebildete Beaufschlagungsabschnitte 24 auf, wobei sowohl die Beaufschlagungsabschnitte 24 als auch die Unterbrechungsabschnitte 25 auf der Umlaufkreisbahn U der Sälöcher 15 liegen.

Die Ausführungsform des Reinigungselements 17 gemäß Figur 3b weist zusätzlich und gegenüberliegend zu den Beaufschlagungsabschnitten 24 und Unterbrechungsabschnitten 25 korrespondierende Beaufschlagungsabschnitte 24' und Unterbrechungsabschnitte 25' auf, die auf einer anderen Umlaufkreisbahn U' von Sälöchern 15' liegen.

Die Beaufschlagung von drei benachbarten Sälöchern 15 ist in der vorliegenden Ausführungsform gleichzeitig, da der Abstand A zwischen zwei benachbarten Sälöchern 15 mit dem Abstand B zwischen zwei benachbarten Beaufschlagungsabschnitten 24, 24' identisch, in bevorzugter Ausführungsform geringfügig kleiner, beispielsweise um den Durchmesser der Sälöcher 15 verringert ist, so dass die Sälöcher 15 in unmittelbarer Folge sequenziell in die Beaufschlagungsabschnitte 24, 24' eintreten.

Die gegenüberliegenden Sälöcher 15, 15' können mit Vorteil derart versetzt angeordnet sein, dass die Sälöcher 15' von den Unterbrechungsabschnitten 25' verdeckt sind, während die Sälöcher 15 sich im Bereich der Beaufschlagungsabschnitte 24 befinden.

Eine äußerst effektive und gleichzeitig platzsparende, mehrfache Druckbeaufschlagung jedes einzelnen Loches 15, 15' der Säscheibe 9 durch ein einziges Reinigungselement wird in der bevorzugten Ausführungsform der Erfindung verwirklicht.

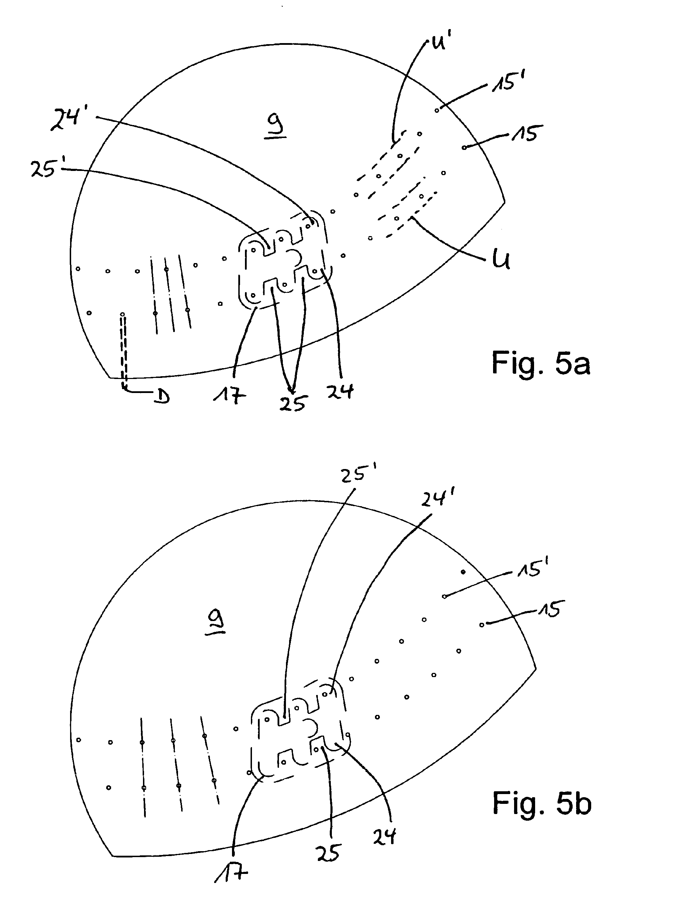

In Figuren 5a und 5b sind Beispiele für die Anordnung der Beaufschlagungsabschnitte 24, 24' sowie Unterbrechungsabschnitte 25, 25' gegenüber Sälöchern 15, 15' gezeigt.

### Bezugszeichenliste

- A: Abstand
- B: Abstand
- D: Durchmesser
- F: Fahrtrichtung
- R: Rotationsrichtung Säscheibe
- U, U': Umlaufkreisbahn
- K: Kreisringsektor
- 1: Säaggregat
- 2: Arm
- 3: Säherz
- 3.1: Hälfte
- 3.2: Hälfte
- 4: Tank
- 4d: Deckel
- 4k: Kanal
- 5: Säschar
- 6: Laufräder
- 7: Scharspitze
- 8: Arbeitsraum
- 9: Säscheibe
- 10: Druckkammer
- 11: Saatgutkammer
- 12: Dichtring
- 13: Unterdruckbereich
- 13a: Anschluss
- 14: Normaldruckbereich
- 15, 15': Sälöcher
- 16: Saatgut
- 17: Reinigungselement
- 18: Fluidanschluss
- 18o: Öffnung
- 19: Faltenbalg
- 20: Fluidkammer
- 21: Rückwand
- 22: Seitenwände
- 23: Kontaktfläche
- 24, 24': Beaufschlagungsabschnitt
- 25, 25': Unterbrechungsabschnitt

## Patentansprüche

1. Säherz (3) für eine Einzelkortnsämaschine mit folgenden Merkmalen:
- eine in einer Rotationsrichtung R rotierbare Säscheibe (9),
- die Säscheibe (9) weist Sälöcher (15) in definierter Anordnung auf,
- einen Aufnahmebereich zur Aufnahme des Saatguts in die Sälöcher (15) und einen Abgabebereich zur Abgabe des Saatguts (16),
- zwischen dem Abgabebereich und dem Aufnahmebereich sind Reinigungsmittel zur Reinigung der Sälöcher (15) während des Betriebs des Säherzes (3) vorgesehen,
**dadurch gekennzeichnet, dass**
Reinigungsmittel zur Reinigung jedes Loches (15) pro Umdrehung der Säscheibe (9) in zumindest zwei separaten Reinigungsphasen vorgesehen sind, wobei zumindest zwei Reinigungsphasen kontaktlos erfolgen.

2. Säherz (3) nach Anspruch 1, **dadurch gekennzeichnet, dass** die Reinigungsmittel Fluidmittel, insbesondere eine Fluidströmung, vorzugsweise Druckluftbeaufschlagung, umfassen.

3. Säherz (3) nach einem der vorhergehenden Ansprüche, **dadurch gekennzeichnet, dass** die Reinigung während der Rotation der Säscheibe (9) erfolgt.

4. Säherz (3) nach einem der vorhergehenden Ansprüche, **dadurch gekennzeichnet, dass** die Reinigungsphasen in definierten, vorzugsweise gleichmäßigen, Intervallen vorgesehen sind.

5. Säherz (3) nach einem der vorhergehenden Ansprüche, **dadurch gekennzeichnet, dass** die Reinigungsmittel ein zu einem Umlaufkreisbahn U der Sälöcher (15) gegenüberliegend befestigtes, insbesondere einziges, Reinigungselement umfassen, wobei das Reinigungselement an der Säscheibe (9), insbesondere federbelastet, anliegt und sich über einen Kreisringsektor K der Säscheibe (9) erstreckt.

6. Säherz (3) nach Anspruch 5, **dadurch gekennzeichnet, dass** das Reinigungselement eine durch die Säscheibe (9), Seitenwände (22) und eine der Säscheibe (9) gegenüberliegende Rückwand (21) gebildete Fluidkammer (20) aufweist, die, insbesondere über eine Öffnung (18o) in der Rückwand (21), mit einem Fluid, insbesondere Luft, beaufschlagbar ist.

7. Säherz (3) nach Anspruch 6, **dadurch gekennzeichnet, dass** jedes Loch (15) pro Umdrehung der Säscheibe (9) zumindest zwei Mal, insbesondere vollflächig, von der Fluidkammer (20) mit Fluid beaufschlagbar ist.

8. Säherz (3) nach einem der Ansprüche 6 bis 7, **dadurch gekennzeichnet, dass** die Fluidkammer (20) Beaufschlagungsabschnitte (24) ausbildende Unterbrechungsabschnitte (25) zur Unterbrechung der Fluidbeaufschlagung aufweist.

9. Säherz (3) nach Anspruch 8, **dadurch gekennzeichnet, dass** die Beaufschlagungsabschnitte (24) in einem Abstand B entlang der Umlaufkreisbahn U angeordnet sind, der dem Abstand A zur gleichzeitigen Beaufschlagung von mindestens zwei benachbarten Sälöchern (15) im Wesentlichen entspricht.

10. Säherz (3) nach einem der Ansprüche 6 bis 9, **dadurch gekennzeichnet, dass** die Reinigungsmittel, insbesondere die Fluidkammer (20), mehrere Umlaufkreisbahnen U, U' beaufschlagend ausgebildet ist, wobei die Reinigungsphasen der Sälöcher (15) der Umlaufkreisbahnen U, U' im Wechsel oder gleichzeitig mit den Reinigungsphasen von Sälöchern (15') einer anderen, insbesondere parallel zur Umlaufkreisbahn U angeordneten, Umlaufkreisbahn U' ablaufend ausgebildet sind.

11. Säherz (3) nach einem der vorhergehenden Ansprüche, **dadurch gekennzeichnet, dass** das Säherz (3) einen Fluidanschluss (18) zum Anschluss der Reinigungsmittel, insbesondere eines Reinigungselements (17), aufweist, wobei das Fluid mittels einer Pumpe von einem Fluidreservoir oder einer Pneumatik der Einzelkornsämaschine zum Fluidanschluss (18) förderbar ist.

12. Säherz (3) nach Anspruch 11, **dadurch gekennzeichnet, dass** der Fluidanschluss (18) federnd ausgebildet ist, insbesondere durch einen Faltenbalg (19).

## Claims

1. A sowing heart (3) for a single grain sowing machine with the following features:
- a sowing disc (9) rotatable in a rotation direction R,
- the sowing disc (9) has sowing holes (15) in a defined arrangement,
- a receiving region to receive the seed into the sowing holes (15) and a delivery region for delivery of the seed (16),
- cleaning means for cleaning the sowing holes (15) during the operation of the sowing heart (3) are provided between the delivery region and the receiving region,
**characterized in that**
cleaning means for cleaning each hole (15) per revolution of the sowing disc (9) are provided in at least two separate cleaning phases, wherein at least two cleaning phases take place in a contactless manner.

2. The sowing heart (3) according to Claim 1, **characterized in that** the cleaning means comprise fluid means, in particular a fluid flow, preferably pressurization of air.

3. The sowing heart (3) according to one of the preceding claims, **characterized in that** the cleaning takes place during the rotation of the sowing disc (9).

4. The sowing heart (3) according to one of the preceding claims, **characterized in that** the cleaning phases are provided in defined, preferably uniform intervals.

5. The sowing heart (3) according to one of the preceding claims, **characterized in that** the cleaning means comprise an in particular single cleaning element which is attached opposite to a peripheral circular path U of the sowing holes (15), wherein the cleaning element abuts against the sowing disc (9), in particular in a spring-loaded manner, and extends over a circular ring sector K of the sowing disc (9).

6. The sowing heart (3) according to Claim 5, **characterized in that** the cleaning element has a fluid chamber (20) which is formed by the sowing disc (9), side walls (22) and a rear wall (21) lying opposite the sowing disc (9), and which is able to be acted upon by a fluid, in particular air, in particular via an opening (18o) in the rear wall (21).

7. The sowing heart (3) according to Claim 6, **characterized in that** each hole (15) is able to be acted upon by fluid from the fluid chamber (20) per revolution of the sowing disc (9) at least twice, in particular over the entire surface.

8. The sowing heart (3) according to one of Claims 6 to 7, **characterized in that** the fluid chamber (20) has interruption sections (25) forming pressurization sections (24) for interrupting the action by fluid.

9. The sowing heart (3) according to Claim 8, **characterized in that** the pressurization sections (24) are arranged at a distance B along the peripheral circular path U, which corresponds substantially to the distance A for simultaneous pressurization of at least two adjacent sowing holes (15).

10. The sowing heart (3) according to one of Claims 6 to 9, **characterized in that** the cleaning means, in particular the fluid chamber (20), is constructed pressurizing several peripheral circular paths U, U', wherein the cleaning phases of the sowing holes (15) of the peripheral circular paths U, U' are formed so as to elapse alternately or simultaneously with the cleaning phases of sowing holes (15') of another peripheral circular path U' arranged in particular parallel to the peripheral circular path U.

11. The sowing heart (3) according to one of the preceding claims, **characterized in that** the sowing heart (3) has a fluid connection (18) for connection of the cleaning means, in particular of a cleaning element (17), wherein the fluid is able to be conveyed by means of a pump from a fluid reservoir or a pneumatic system of the single grain sowing machine to the fluid connection (18).

12. The sowing heart (3) according to Claim 11, **characterized in that** the fluid connection (18) is constructed so as to be elastic, in particular by a bellows (19).

## Revendications

1. Elément distributeur (3) pour un semoir monograine avec les caractéristiques suivantes :
- un disque à semences (9) rotatif dans une direction de rotation R,
- le disque à semences (9) présente des trous à semences (15) dans une disposition définie,
- une zone de réceptacle pour recevoir les semences dans les trous à semences (15) et une zone de délivrance pour délivrer les semences (16),
- entre la zone de délivrance et la zone de réceptacle, des moyens de nettoyage pour nettoyer les trous à semences (15) pendant le fonctionnement de l'élément distributeur (3) sont prévus,
**caractérisé en ce que**
des moyens de nettoyage pour nettoyer chaque trou (15) par révolution du disque à semences (9) en au moins deux phases de nettoyage séparées sont prévus, dans lequel au moins deux phases de nettoyage ont lieu sans contact.

2. Elément distributeur (3) selon la revendication 1, **caractérisé en ce que** les moyens de nettoyage comprennent un milieu fluide, notamment un écoulement de fluide, de préférence une sollicitation par de l'air pressurisé.

3. Elément distributeur (3) selon une des revendications précédentes, **caractérisé en ce que** le nettoyage a lieu pendant la rotation du disque à semences (9).

4. Elément distributeur (3) selon une des revendications précédentes, **caractérisé en ce que** les phases de nettoyage sont prévues à intervalles définis, de préférence réguliers.

5. Elément distributeur (3) selon une des revendications précédentes, **caractérisé en ce que** les moyens de nettoyage comprennent un élément de nettoyage, notamment unique, fixé en vis-à-vis d'une circonférence circulaire en U des trous à semences (15), dans lequel l'élément de nettoyage vient reposer sur le disque à semences (9), notamment par rappel élastique, et s'étend sur un secteur d'anneau circulaire K du disque à semences (9).

6. Elément distributeur (3) selon la revendication 5, **caractérisé en ce que** l'élément de nettoyage présente une chambre de fluide (20) formée par le disque à semences (9), les parois latérales (22) et une paroi arrière (21) opposée au disque à semences (9), qui peut être sollicitée, notamment par l'intermédiaire d'une ouverture (18o) dans la paroi arrière (21), avec un fluide, notamment de l'air.

7. Elément distributeur (3) selon la revendication 6, **caractérisé en ce que** chaque trou (15) peut être sollicité avec un fluide par révolution du disque à semences (9) au moins deux fois, notamment sur toute la surface, par la chambre de fluide (20).

8. Elément distributeur (3) selon une des revendications 6 à 7, **caractérisé en ce que** la chambre de fluide (20) présente des portions d'interruption (25) formant des portions de sollicitation (24) pour interrompre la sollicitation avec un fluide.

9. Elément distributeur (3) selon la revendication 8, **caractérisé en ce que** les portions de sollicitation (24) sont disposées à un espacement B le long de la circonférence circulaire U, qui correspond essentiellement à l'espacement A par rapport à la sollicitation simultanée d'au moins deux trous à semences (15) voisins.

10. Elément distributeur (3) selon une des revendications 6 à 9, **caractérisé en ce que** les moyens de nettoyage, notamment la chambre de fluide (20), est réalisé de manière à solliciter plusieurs circonférences circulaires U, U', dans lequel les phases de nettoyage des trous à semences (15) des circonférences circulaires U, U' sont réalisées de manière à se dérouler en alternance ou simultanément aux phases de nettoyage des trous à semences (15') d'un autre circonférence circulaire U', disposée notamment parallèlement à la circonférence circulaire U.

11. Elément distributeur (3) selon une des revendications précédentes, **caractérisé en ce que** l'élément distributeur (3) présente un raccord de fluide (18) pour raccorder le moyen de nettoyage, notamment un élément de nettoyage (17), dans lequel le fluide peut être transporté au moyen d'une pompe depuis un réservoir de fluide ou une pneumatique du semoir monograine vers le raccord de fluide (18).

12. Elément distributeur (3) selon la revendication 11, **caractérisé en ce que** le raccord de fluide (18) est conçu élastiquement, notamment par un soufflet (19).
